# EUROPÄISCHE PATENTANMELDUNG

(11) **EP 4 567 377 A1**
(43) Veröffentlichungstag der Anmeldung: **11.06.2025**
(21) Anmeldenummer: 23215113.4
(22) Anmeldetag: 08.12.2023
(51) Int. Cl.: G01C 15/00, E02F 9/26, G01C 21/20, G01S 17/66, G05D 1/244, G05D 1/43, G05D 1/648

(54) **VERFAHREN ZUR LOKALISIERUNG EINER ZIELPOSITION, LOKALISIERUNGSGERÄT, COMPUTERPROGRAMMPRODUKT SOWIE BAUROBOTER**

(71) Anmelder: Hilti Aktiengesellschaft, 9494 Schaan (LI)
(72) Erfinder: Pai, Arathi, 9475 Sevelen (CH)
(74) Vertreter: Hilti Aktiengesellschaft Corporate Intellectual Property

(57) **Zusammenfassung**

Die Erfindung betrifft ein **Verfahren** (1000, 1001) zur Lokalisierung einer Zielposition (226), insbesondere einer Arbeitsposition, einer Position eines Bauroboters (10) oder einer Position eines tragbaren Gerätes, auf einer Baustelle (200), beispielsweise einer Hochbau-Baustelle (200) oder einer Tiefbau-Baustelle (200), durch ein Lokalisierungsgerät (32). Vorgesehen ist, dass das Lokalisierungsgerät (32) die Zielposition (226) grob lokalisiert, das heißt ein Baustellenteil (210) der Baustelle (200) bestimmt, in der sich die Zielposition (226) befindet. Dadurch kann die Zuverlässigkeit von Lokalisierungen verbessert werden. Des Weiteren betrifft die Erfindung ein **Lokalisierungsgerät** (32), ein **Computerprogrammprodukt** (30) sowie einen **Bauroboter** (10).

## Beschreibung

Die Erfindung geht aus von einem Verfahren zur Lokalisierung einer Zielposition auf einer Baustelle.

Damit beispielsweise ein Bauroboter an einer Arbeitsposition als Zielposition eine Bauarbeit ausführen kann, muss er diese Arbeitsposition lokalisieren.

Im Freien ist es dazu denkbar, Satelliten-gestützte Ortungssysteme zu verwenden. Derartige Ortungssysteme setzen jedoch den Empfang von Signalen von mehreren Satelliten voraus.

Dies ist jedoch nicht bei allen Baustellen zuverlässig gegeben. Beispielsweise bei Bauarbeiten im Inneren eines Gebäudes ist regelmäßig keine zuverlässige Ortung auf Basis eines solchen Satelliten-gestützten Ortungssystems möglich. Je nach Wetterlage kann auf Baustellen in einem Außenbereich keine ausreichende Signalstärke empfangbar sein.

Bislang ist es bekannt, Zielpositionen innerhalb eines Gebäudes beispielsweise mit Hilfe einer Totalstation zu bestimmen.

Mit einer solchen Totalstation ist es jedoch lediglich möglich, die Koordinaten der Zielposition innerhalb eines Baustellenteils, beispielsweise innerhalb eines Raumes, beispielsweise relativ zu vorab definierten Eichmarkierungen, zu bestimmen. Auch erfordert die Verwendung einer Totalstation eine Sichtverbindung zwischen dem Standort der Totalstation und der Position der zu bestimmenden Zielposition.

Es ist also für einen erfolgreichen Einsatz der Totalstation erforderlich, dass diese sich bereits in dem richtigen Baustellenteil befindet und dass sie die Sichtverbindung herstellen kann. Moderne Bürokomplexe, aber auch andere Gebäude, wie beispielsweise Produktionsbauten, weisen häufig sich wiederholende und / oder spiegelsymmetrisch ausgebildete Strukturen auf. Beispielsweise kann in einem Bürokomplex vorgesehen sein, dass eine Vielzahl gleicher Einzelbüros nebeneinander zu errichten sind. Ist nun in diesem Bürokomplex kein globales Ortungssignal wie beispielsweise ein Satelliten-gestütztes Ortungssystem, verfügbar, so kann zwar mithilfe der Totalstation innerhalb eines der Einzelbüros eine dort befindliche Position bestimmt werden, es kann jedoch nicht sichergestellt werden, dass eine bestimmte Zielposition innerhalb eines bestimmten Einzelbüros überhaupt im richtigen Einzelbüro lokalisiert wird, dass also die bestimmte Position tatsächlich der zu bestimmenden Zielposition entspricht. Die Totalstation kann sich beispielsweise schlichtweg in einem anderen Einzelbüro befinden.

Aufgabe der vorliegenden Erfindung ist es daher, Verfahren und Vorrichtungen anzubieten, die es ermöglichen, Zielpositionen auf beliebigen Baustellen zuverlässig zu bestimmen, insbesondere bei Baustellen, bei denen keine oder nicht hinreichend zuverlässige Signale von Satelliten-gestützten Ortungssystemen empfangbar sind.

Gelöst wird die Aufgabe durch ein **Verfahren** zur Lokalisierung einer Zielposition, insbesondere einer Arbeitsposition, einer Position eines Bauroboters oder einer Position eines tragbaren Gerätes, auf einer Baustelle, beispielsweise einer Hochbau-Baustelle oder einer Tiefbau-Baustelle, durch ein Lokalisierungsgerät, wobei das Lokalisierungsgerät die Zielposition grob lokalisiert, das heißt ein Baustellenteil der Baustelle bestimmt, in der sich die Zielposition befindet. Die Groblokalisierung kann umfassen, dass das Lokalisierungsgerät ermittelt, in welchem bestimmten Baustellenteil, bei Gebäuden beispielsweise in welchem Raum oder auf welcher Ebene oder in welchem Gebäudebereich, sich die Zielposition befindet.

Die Position kann alternativ oder ergänzend zu Längenkoordinaten Richtungsdaten, beispielsweise eine Lage oder Ausrichtung eines Objekts, umfassen. Sie kann insbesondere ergänzend zu 2D- oder 3D-Koordinaten der Zielposition ein-, zwei- oder dreidimensionale Richtungsdaten umfassen. Die Position kann also drei-, vier-, fünf- oder sechs-dimensionalen Daten entsprechen.

Ein Gedanke der Erfindung ist es, anstelle eines Ortungssystems, wie beispielsweise einem Satelliten-gestützten Ortungssystem, das grundsätzlich ausgebildet ist, eine Position global anhand eines globalen Koordinatensystems durch einen einzigen Messschritt zu bestimmen, ein mehrschrittiges Lokalisierungsverfahren zu verwenden, bei dem einer der Schritte die Groblokalisierung umfasst. Durch die Groblokalisierung können Irrtümer und Messfehler vermieden werden, die sich beispielsweise bei Gebäude mit sich wiederholenden und / oder spiegelsymmetrischen Strukturen in unterschiedlichen Bauphasen ergeben können.

Sind an Baustellenteilen, beispielsweise Räumen, Identifikationsmarkierungen angebracht, kann die Groblokalisierung einfach dadurch erfolgen, dass das Lokalisierungsgerät die das Baustellenteil identifizierende Identifikationsmarkierung auswertet, insbesondere liest. Die Identifikationsmarkierung kann sich beispielsweise an einer Wand, einer Tür, einem Boden und / oder einer Decke befinden. Die Identifikationsmarkierung kann einen Baustellenteil, an oder in dem sie sich befindet, kennzeichnen. Die Identifikationsmarkierung kann beispielsweise eine Raumnummer oder eine Stockwerksnummer aufweisen. Das Lokalisierungsgerät kann beispielsweise eingerichtet sein, Raumnummern auszuwerten. Es kann dazu eingerichtet sein, bestimmte Bereiche einer Wand, einer Umgebung einer Tür, eines Bodens und / oder einer Decke zu analysieren. Denkbar ist beispielsweise, dass das Lokalisierungsgerät eingerichtet ist, eine Stockwerksnummer, beispielsweise von einer Anzeigeeinheit eines Aufzugs oder einem Schild, zu lesen.

Das Lokalisierungsgerät kann eine Kamera umfassen. Es kann eingerichtet sein, mit Hilfe der Kamera eine Bildaufnahme aufzunehmen. Er kann eingerichtet sein, die Bildaufnahme mithilfe einer Bildauswertungseinheit auszuwerten.

Das Lokalisierungsgerät kann ferner ermitteln, in welchem Baustellenteil sich die Zielposition befinden soll. Beispielsweise kann es dazu eingerichtet sein, auf einen Baustellenplan, beispielsweise ein BIM-Modell und / oder CAD-Daten zuzugreifen. Durch Abgleich der aus der Identifikationsmarkierung abgeleiteten Daten mit dem ermittelten Baustellenteil kann das Lokalisierungsgerät beispielsweise ermitteln, ob sich die Zielposition in dem Baustellenteil, beispielsweise dem Raum, befindet, in dem es sich selbst befindet und / oder dessen Identifikationsmarkierung es ausgewertet hat.

Befindet sich das Lokalisierungsgerät in einem falschen Baustellenteil, kann es ein Hinweissignal ausgeben. Alternativ oder ergänzend ist denkbar, dass es sich selbst oder ein anderes Gerät, beispielsweise den Bauroboter oder eine Totalstation oder dergleichen, zu einem anderen, insbesondere zum korrekten, Baustellenteil bewegt oder das das Lokalisierungsgerät das andere Gerät entsprechend steuert, sodass sich das andere Gerät in den anderen Baustellenteil bewegt. Gegebenenfalls kann diese Prozedur so lange wiederholt werden, bis das Lokalisierungsgerät den korrekten Baustellenteil ermittelt oder gegebenenfalls erreicht hat.

Die Identifikationsmarkierung kann auch ausgewertet werden, während sich das Lokalisierungsgerät beispielsweise noch einem bestimmten Baustellenteil nähert oder sich auf dem Baustellenteil bewegt. Beispielsweise kann es eingerichtet sein, Bildaufnahmen von einer in oder an einem Aufzug angezeigten Stockwerksnummer aufzunehmen und auszuwerten. Es kann dadurch beispielsweise ermitteln, in welchem Stockwerk es sich befindet oder ob es sich in dem Stockwerk befindet, in dem sich auch die Zielposition befinden soll.

Durch das Verfahren kann somit sichergestellt werden, dass tatsächlich die gewünschte Zielposition und nicht etwa eine andere, analoge Position in einem anderen Baustellenteil bestimmt oder gegebenenfalls gefunden wird, nur weil die Baustelle beispielsweise einen hohen Grad an Symmetrien aufweist.

Die Zuverlässigkeit, mit der Zielpositionen bestimmt werden können, lässt sich somit erheblich steigern. Schwerwiegende Folgen grundsätzlich falscher Lokalisierungen lassen sich vermeiden oder zumindest deren Wahrscheinlichkeit erheblich senken. Insbesondere kann durch das Verfahren vermieden werden, dass autonom agierende Bauroboter durch falsche Lokalisierungen von Zielpositionen Bauarbeiten in komplett falschen Baustellenteilen ausführen. Dazu kann vorgesehen sein, dass der Bauroboter ein solches Lokalisierungsgerät verfahrensgemäß benutzt oder auf Lokalisierungsdaten aus dem Verfahren Zugriff hat. Dann kann das Verfahren helfen, solche Fehlarbeiten zu vermeiden und die durch solche Fehlarbeiten ausgelösten Korrekturarbeiten und die damit verbundenen Kostenrisiken deutlich zu reduzieren.

Das Verfahren kann in einem weiteren Schritt vorsehen, dass der Bauroboter die Zielposition fein lokalisiert, das heißt die Zielposition relativ zu einer oder mehrerer Eichpositionen, beispielsweise Bezugspunkte, bestimmt. Die Eichpositionen können beispielsweise eingemessene Positionsmarkierungen, insbesondere innerhalb des Baustellenteils, in dem sich das Lokalisierungsgerät befindet, sein. Auch ist denkbar, als Eichpositionen Punkte an vorhandenen Strukturen vorzusehen. Als Eichposition kann beispielsweise auch eine Ecke eines Raumes dienen, sofern die Ecke dem Planungs-Koordinatensystem zuordenbar ist, in dem die Zielposition definiert ist. Beispielsweise kann der Bauroboter eingerichtet sein, auf dem Baustellenteil eine Totalstation zu platzieren. Mit Hilfe der Totalstation kann er dann, wenn er zuvor mit Hilfe des Lokalisierungsgeräts ermittelt hat, dass er sich im richtigen Baustellenteil befindet, in diesem Baustellenteil die Zielposition fein lokalisieren.

Beispielsweise kann er ermitteln, auf welcher Wand und an welcher Position innerhalb der Wand sich die zu bestimmende Zielposition befindet. Anstelle oder ergänzend zur Totalstation ist auch denkbar, dass der Bauroboter die Feinlokalisierung mit Hilfe eines oder mehrere LIDAR und / oder einer oder mehrere Kameras ermittelt. Beispielsweise kann die Feinlokalisierung mithilfe eines SLAM-Algorithmus erfolgen.

Häufig, beispielsweise in frühen Phasen von Baustellen, sind jedoch derartige Identifikationsmarkierungen zur Identifikation des jeweiligen Baustellenteils noch nicht verfügbar.

Daher kann bei einer Klasse von Varianten des Verfahrens vorgesehen sein, dass das Lokalisierungsgerät zur groben Lokalisierung wenigstens ein von außerhalb des Baustellenteils, insbesondere von außerhalb der Baustelle stammendes Signal auswertet. Das Signal kann von einer Signalquelle, die sich außerhalb des Baustellenteils, insbesondere außerhalb der Baustelle, befindet, stammen. Die Signalquelle kann das Signal erzeugt oder maßgeblich verändert haben. Beispielsweise kann eine Bergwand als Signalquelle Sonnenlicht als ursprüngliches Signal reflektiert und so in dessen Farbe maßgeblich verändert haben, dass die Bergwand im reflektierten Licht anstatt der Sonne abgebildet bzw. erkennbar ist. Das Signal kann allgemein ein elektromagnetisches, insbesondere optisches oder magnetisches, akustisches oder Schwingungs-bezogenes, gravitatives, Material-bezogenes, thermisches oder kernphysikalisches, beispielsweise Radioaktivitäts-bezogenes, Signal sein. Ein Material-bezogenes Signal kann beispielsweise eine Windstärke oder Windrichtung, ein Wassergehalt, insbesondere ein Feuchtigkeitsgrad, ein Druck, beispielsweise ein Luftdruck, oder dergleichen sein. Als Radioaktivitäts-bezogenes Signal kann beispielsweise eine Radon-Aktivität, beispielsweise als Maß für eine Höhenlage in einem Gebäude, denkbar sein. Als akustisches Signal ist beispielsweise Intensität, Klangfarbe und / oder Richtung von Schall, beispielsweise Straßenlärm, denkbar. Es kann sich beispielsweise so identifizieren lassen, in welcher von zwei gegensätzlichen Richtungen sich mit großer Wahrscheinlichkeit eine Straße befindet, selbst wenn zur Straße keine Sichtverbindung besteht. Die Stärke, Frequenz oder Frequenzspektrum und / oder eine Art von Schwingungen, beispielsweise einer Bodenfläche, auf der sich das Lokalisierungsgerät befindet, können einen Indikator für eine Höhenlage innerhalb eines Gebäudes und damit beispielsweise für eine Stockwerksnummer bilden.

Bei einer weiteren Klasse von Varianten des Verfahrens kann vorgesehen sein, dass das Lokalisierungsgerät zur groben Lokalisierung wenigstens ein natürliches Signal auswertet.

Unter einem natürlichen Signal kann dabei ein Signal einer natürlich vorhandenen, nicht menschengemachten Signalquelle verstanden werden.

Beispielsweise kann das natürliche Signal dem Erdmagnetfeld entsprechen. Dazu kann das Lokalisierungsgerät einen Magnetfeldsensor aufweisen. Mithilfe des Magnetfeldsensors kann das Lokalisierungsgerät seine Ausrichtung und / oder die Richtung, in der sich die zu bestimmende Zielposition befinden muss, ermitteln. Häufig kann damit bereits ein Suchbereich, in dem sich die zu bestimmende Zielposition befinden muss, auf einen Teilbereich der gesamten Baustelle, beispielsweise auf eine Hälfte oder sogar auf ein Viertel der gesamten Baustelle, eingeschränkt werden.

Die Gravitationskonstante kann Hinweise auf benachbarte Konzentrationen von Massen liefern. Beispielsweise kann hierdurch ein Indikator als Signal gewonnen werden, der, beispielsweise bei sehr hohen Bauwerken, eine Schätzung der Höhe über Grund liefert. Dabei kann auch ausgenutzt werden, dass Wolkenkratzer oder dergleichen im Wesentlichen aus eingefassten Hohlräumen ausgebildet sind, so dass die Gravitationskonstante abnimmt je weiter sich das Lokalisierungsgerät vom Erdboden weg befindet. Auch so kann beispielsweise eine Stockwerksnummer bestimmt werden.

Das natürliche Signal kann auch auf einem Luftdruck beruhen. Auch anhand des Luftdrucks kann die Stockwerksnummer ermittelt werden. Insbesondere ist denkbar, dass der Bauroboter eine Veränderung eines Luftdrucks protokolliert. Er kann beispielsweise bei Eintritt in eine Baustelle einen Basisluftdruck bestimmen. Durch wiederholte Messung des Luftdrucks und der Berechnung einer Differenz zu den Basisluftdruck kann der Bauroboter auf etwaige Veränderungen seiner Höhenlage, und damit wiederum beispielsweise auf eine Stockwerksnummer, schließen.

Allgemein ist auch denkbar, dass mehrere Signale in Kombination ausgewertet werden. Beispielsweise können ein Luftdruck und eine Temperatur, ein Schwingungsverhalten etc. kombiniert werden, um ein Signal für eine Höhenlage oder Stockwerksnummer zu ermitteln. Durch Kombination kann die Zuverlässigkeit erhöht werden.

Bei einer Klasse von Varianten des Verfahrens ist denkbar, dass das natürliche Signal auf Licht wie beispielsweise aus dem Weltraum stammendes Licht, insbesondere Sonnenlicht, Mondlicht und / oder einem sonstigen Sternenlicht, beruht. Dies ist insbesondere denkbar, wenn ein Lichteinfall von außen in das Innere der Baustelle, insbesondere den Baustellenteil, in dem sich der Bauroboter befindet, möglich ist. Dies kann beispielsweise Räume betreffen, die Fenster, Glasfronten, Lichtschächte und / oder dergleichen aufweisen.

Das Signal kann auf einer Einfallsrichtung des Lichts beruhen. Denkbar ist beispielsweise, dass das Lokalisierungsgerät eingerichtet ist, eine Einfallsrichtung des Lichts zu bestimmen. In Verbindung mit der Tageszeit lässt sich damit beispielsweise ermitteln, in welchem Baustellenbereich, beispielsweise eingeteilt in einen nördlichen, südlichen, östlichen oder westlichen Baustellenbereich, sich das Lokalisierungsgerät befindet. Alternativ oder ergänzend kann auch ein Schatten erfasst werden. Beispielsweise kann die Richtung eines Schattens ermittelt werden, wodurch sich analoge Auswertungsmöglichkeiten für eine Groblokalisierung wie bei der Analyse der Einfallsrichtung des Lichts ergeben.

Denkbar ist insbesondere, dass das natürliche Signal ein optisches Signal ist. Es kann beispielsweise durch Aufnahme eines Bildes, insbesondere eines Bereiches außerhalb der Baustelle oder des Baustellenteils, erfasst werden. So ist denkbar, dass das Lokalisierungsgerät durch das Fenster, die Glasfront und / oder dergleichen hindurch die Bildaufnahme aufnimmt. Auf der Bildaufnahme können dann geographische Elemente abgebildet sein, die wiederum zur Groblokalisierung verwendet werden können.

Zur Groblokalisierung kann das GIS-Daten verwenden. Das Lokalisierungsgerät kann auf Basis des Signals beispielsweise einen Baustellenbereich oder gar das Baustellenteil ermitteln, in dem es sich befindet.

Es kann die Bildaufnahme mit den GIS-Daten, einem Teil dieser oder einer auf Basis der GIS-Daten erstellten Modellrechnung vergleichen.

Bei einem Gebäude, dass zwei spiegelsymmetrisch angeordnete Räume aufweist, wobei jeder der Räume ein Fenster mit Blick nach außerhalb der Baustelle aufweist, kann ein solcher Vergleich es ermöglichen, die ansonsten bis auf die Spiegelsymmetrie gleichen Räume voneinander zu unterscheiden. Die GIS-Daten können Kartendaten einer Umgebung der Baustelle umfassen. Auf einer Seite der Baustelle kann sich beispielsweise ein Gebirge befinden. Auf der anderen Seite der Baustelle kann beispielsweise ein Gebäude errichtet sein.

Je nachdem, ob auf der Bildaufnahme nun das Gebirge oder das Gebäude erkennbar ist, befindet sich das Lokalisierungsgerät in dem einen oder dem anderen Raum oder ist in die ein oder die andere Richtung ausgerichtet.

Besonders vorteilhaft ist auch, dass mittlerweile derartige GIS-Daten hochverfügbar sind. Insbesondere für Städte und Gemeinden sind oftmals sogar auf Ebene einzelner Häuser Strukturen in den GIS-Daten hinterlegt. So können Straßenzüge oder sogar einzelne Häuser identifiziert und voneinander unterschieden werden. Dadurch kann es möglich werden, eine Vielzahl von Räumen, die abgesehen von Symmetrien gleich oder nahezu gleich ausgebildet sind, voneinander zu unterscheiden. In einer Reihe mehrerer nebeneinander angeordneter Räume kann ermittelbar sein, an wievielter Stelle sich ein Raum innerhalb der Reihe befindet.

Besonders günstig ist es, bei einer solchen Groblokalisierung unter Verwendung von GIS-Daten weitere optische und / oder akustische Signale auszuwerten. Dies kann auch im Rahmen der Auswertung der Bildaufnahme erfolgen. Dann können sogar Räume unterschieden werden, selbst wenn sich die Baustelle in einer Umgegend befindet, die selbst wiederum eine hohe Symmetrie aufweist. Eine solche Situation kann sich beispielsweise ergeben, wenn sich die Baustelle in der Nähe von Reihenhaussiedlungen oder dergleichen befindet.

In den Rahmen der Erfindung fällt des Weiteren **ein Verfahren zur Ausführung einer Bauarbeit auf einer Baustelle** an einer Zielposition, beispielsweise eine Hochbau-Baustelle oder eine Tiefbau-Baustelle, durch einen Bauroboter, wobei ein Lokalisierungsgerät die Zielposition unter Verwendung des vorangehend beschriebenen Verfahrens grob lokalisiert, also ein Baustellenteil der Baustelle bestimmt, in dem sich die Zielposition befindet, wobei Koordinaten der Zielposition relativ zum Baustellenteil oder zur Baustelle bestimmt werden, und wobei der Bauroboter die Bauarbeit an der Zielposition ausführt. Dem Verfahren entsprechend lokalisiert sich der Bauroboter grob unter Verwendung des vorangehend beschriebenen Verfahrens.

Des Weiteren kann der Bauroboter aus einer Datenbank, beispielsweise einem CAD-Modell, einer BIM (building information model)-Datenbank oder dergleichen die auszuführende Bauarbeit auswählen. Der Bauroboter führt die ausgewählte Bauarbeit aus. Durch das Verfahren kann zuverlässig sichergestellt werden, dass Bauarbeiten in den richtigen Baustellenteilen, beispielsweise in den richtigen Räumen, ausgeführt werden.

Denkbar ist, dass der Bauroboter unter anderem die Bauarbeit nach ihrer Art auswählt. Ist der Bauroboter beispielsweise lediglich für eine Art von Bauarbeiten eingerichtet, beispielsweise lediglich für Bohrarbeiten, so kann er konfiguriert sein, lediglich Bauarbeiten auszuwählen, die er zumindest teilweise ausführen kann, im Beispiel also Bauarbeiten, die Bohrarbeiten umfassen.

Ist er eingerichtet, unterschiedliche Arten von Bauarbeiten auszuführen, ist denkbar, dass der Bauroboter Bauarbeiten sortiert nach ihrer Art nacheinander auswählt und ausführt. Dann lassen sich ineffiziente Unterbrechungen, beispielsweise zum Wechseln eines Werkzeugs und / oder einer Werkzeugmaschine, vermeiden.

Der Bauroboter kann die auszuführende Bauarbeit unter Verwendung anhand des durch die Groblokalisierung ermittelten Baustellenteils auswählen. Hat sich beispielsweise der Bauroboter so weit grob lokalisiert, dass bekannt ist, in welchem Baustellenbereich oder dergleichen sich der Bauroboter befindet, so kann der Bauroboter vorzugsweise Bauarbeiten in seiner Nähe, insbesondere im selben Baustellenteil, in dem sich auch der Bauroboter selbst befindet, auswählen. Dadurch lassen sich Unterbrechungen zum Wechseln eines Baustellenteils oder dergleichen verkürzen oder sogar weitestgehend vermeiden.

Um die ausgewählte Bauarbeit ausführen zu können, kann der Bauroboter nun als Zielposition die Arbeitsposition für die ausgewählte Bauarbeit bestimmen. Beispielsweise kann er dazu eine in dem Baustellenteil befindliche Totalstation verwenden oder eine solche Totalstation auf dem Baustellenteil platzieren.

In den Rahmen der Erfindung fällt des Weiteren **ein Lokalisierungsgerät** zur Lokalisierung einer Zielposition, das eingerichtet ist, das eingangs beschriebene Verfahren zur Lokalisierung einer Zielposition auszuführen. Das Lokalisierungsgerät kann einen Computer aufweisen. Der Computer kann wenigstens einen Prozessor und einen Speicher aufweisen. Im Speicher kann auf dem Prozessor ausführbares Computerprogrammprodukt abrufbar abgelegt sein. Das Lokalisierungsgerät kann ein oder mehrere Sensoren aufweisen. Die Sensoren können zur Messung des Signals oder unterschiedlicher Signale eingerichtet sein. Beispielsweise kann das Lokalisierungsgerät eine Kamera und / oder ein Mikrophon, beispielsweise ein Stereomikrophon aufweisen. Es kann auch eine Anzeigeeinheit aufweisen, um Ergebnisse darzustellen. Beispielsweise kann es in Form eines Smartphones ausgebildet sein. Das Lokalisierungsgerät kann auch Teil eines verteilten Rechnersystems, beispielsweise eines Cloud-basierten Rechnersystems, sein.

In den Rahmen der Erfindung fällt des Weiteren ein **Computerprogrammprodukt,** das eingerichtet ist, bei Ausführung auf dem Lokalisierungsgerät das eingangs beschriebene Verfahren zur Lokalisation einer Zielposition auszuführen. Das Computerprogrammprodukt kann auf einem Speichermedium abrufbar abgespeichert sein. Das Speichermedium kann nichtflüchtiger oder flüchtiger Speicher sein. Es kann Teil eines verteilten Rechnersystems, beispielsweise eines Cloud-basierten Rechnersystems sein, sein. Auf diesem kann es über das Internet abrufbar und / oder ausführbar abgelegt sein.

In den Rahmen der Erfindung fällt ferner ein **Bauroboter** zur Ausführung einer Bauarbeit auf einer Baustelle an einer Zielposition, umfassend eine mobile Plattform, einen Roboterarm sowie einem Lokalisierungsgerät. Das Lokalisierungsgerät kann, zumindest teilweise, in eine Steuerung des Bauroboters integriert sein. Die Steuerung kann dazu das Computerprogrammprodukt aufweisen. Die mobile Plattform kann beispielsweise eine Fahrplattform oder eine Flugplattform sein.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: einen Bauroboter;
- Fig. 2: einen Baustellenteil;
- Fig. 3: eine schematische Darstellung einer Baustelle und damit in Verbindung stehender GIS-Daten und
- Fig. 4: ein Verfahren.

In der nachfolgenden Beschreibung der Figuren werden zur Erleichterung des Verständnisses der Erfindung für gleiche oder sich funktional entsprechende Elemente jeweils die gleichen Bezugszeichen verwendet.

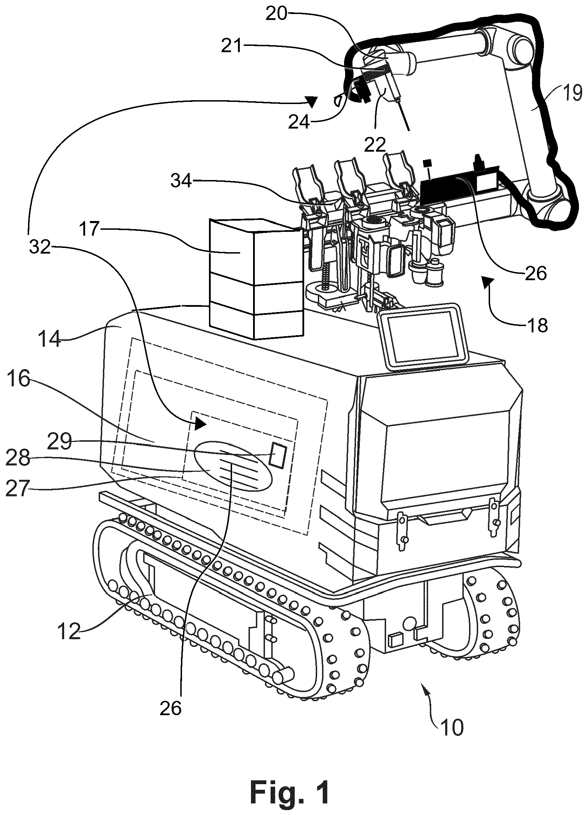

**Fig. 1** zeigt einen Bauroboter **10** mit einer als Kettenfahrwerk ausgebildeten mobilen Plattform **12,** einem in einem Gehäuse **14** ausgebildeten Steuerraum **16** und einem oberseitig des Gehäuses 14 angeordneten Roboterarm **18.** Der Roboterarm 18 umfasst eine Hubvorrichtung **17** zur vertikalen Verlagerung und einen multiaxial steuerbaren Arm **19.** Insgesamt kann der Roboterarm 18 auf eine maximale Reichweite von mindestens 4 m ausgefahren werden, sodass unter Berücksichtigung der Maße der mobilen Plattform 12 sowie des Gehäuses 14 Bauarbeiten in Höhen von bis zu wenigstens 4,5 m ausgeführt werden können.

Am freien Ende des Arms 19 befindet sich ein Endeffektor **20** mit einer Wechselschnittstelle **21.**

An der Wechselschnittstelle 21 ist eine Werkzeugmaschine **22** angeordnet. Die Werkzeugmaschine 22 ist in diesem Ausführungsbeispiel eine Setzwerkzeugmaschine in Form eines Schlagschraubers.

An der Wechselschnittstelle 21 befindet sich auch eine Kamera **24.**

Ferner weist der Bauroboter 10 eine Reinigungsvorrichtung **26** zur Reinigung der Kamera 24, insbesondere einer Sensoroberfläche der Kamera 24, auf. Mit Hilfe des Arms 19 kann die Kamera 24 zur Reinigungsvorrichtung 26 bewegt und durch diese gereinigt werden.

Ferner weist der Bauroboter 10 eine im Steuerraum 16 angeordnete Steuerung **27** auf. Die Steuerung 27 umfasst eine Rechnereinheit mit einer Speichereinheit **28** und einem Prozessor **29.**

Die Steuerung 27 ist mit einem ausführbarem Computerprogrammprodukt **30** ausgestattet. Das Computerprogrammprodukt 30 kann abrufbar in der Speichereinheit 28 gespeichert sein und kann auf der Rechnereinheit ausgeführt werden. Die Steuerung 27 ist mit Hilfe des Computerprogrammprodukts 30 eingerichtet, Bildaufnahmen der Kamera 24 auszuwerten und das weiter unten näher erläuterte Verfahren zu implementieren. Zusammen mit der Kamera 24 und der Steuerung 27 inklusive dem Computerprogrammprodukt 30 ist somit ein Lokalisierungsgerät **32** ausgebildet.

In der Speichereinheit 28 sind unter anderem GIS-Daten gespeichert. In alternativen Ausführungsformen ist denkbar, dass der Bauroboter 10, insbesondere die Steuerung 27, eingerichtet ist, GIS-Daten auch von einem entfernten Rechnersystem, beispielsweise einem Cloud-basierten Rechnersystem, dass zum Beispiel über das Internet erreichbar sein kann, abzurufen und / oder Daten, insbesondere die Bildaufnahmen, an das entfernte Rechnersystem zu senden. Somit ist jeweils für alternative Ausführungsformen denkbar, die Bildaufnahmen lokal durch den Bauroboter 10 und / oder durch das entfernte Rechnersystem auszuwerten.

Weiter ist der Bauroboter 10 eingerichtet, Verschmutzungen einer Sensoroberfläche der Kamera 24 zu detektieren und gegebenenfalls diese mit Hilfe der Reinigungsvorrichtung 26 zu reinigen.

Der Bauroboter 10 ist zur Ausführung von verschiedenen Bauarbeiten in Decken, Wänden oder Böden auf einer Baustelle, insbesondere auf einer Hochbau-Baustelle oder einer Tiefbau-Baustelle, ausgebildet. Um für die jeweiligen Bauarbeiten spezifische Werkzeugmaschinen und / oder Werkzeuge verwenden zu können, weist er einen Werkzeugwechsler **34** auf, in dem verschiedene Werkzeugmaschine und / oder Werkzeuge aufgenommen sein können. Der Bauroboter 10 ist zudem eingerichtet, eine Werkzeugmaschine und / oder ein Werkzeug auszuwählen und am Endeffektor 20 anzuordnen oder gegebenenfalls gegen ein dort bereits befindliches Werkzeug oder eine dort bereits befindliche Werkzeugmaschine zu tauschen.

Der Bauroboter 10, insbesondere der Roboterarm 18, kann noch weitere Vorrichtungen, beispielsweise ein Prisma, ein Farbsprühgerät, einen Distanzmesser, eine Positions- und / oder Lage-Bestimmungslogik, weitere Kameras und / oder dergleichen aufweisen, auch wenn diese aus Vereinfachungsgründen in Fig. 1 nicht dargestellt sind.

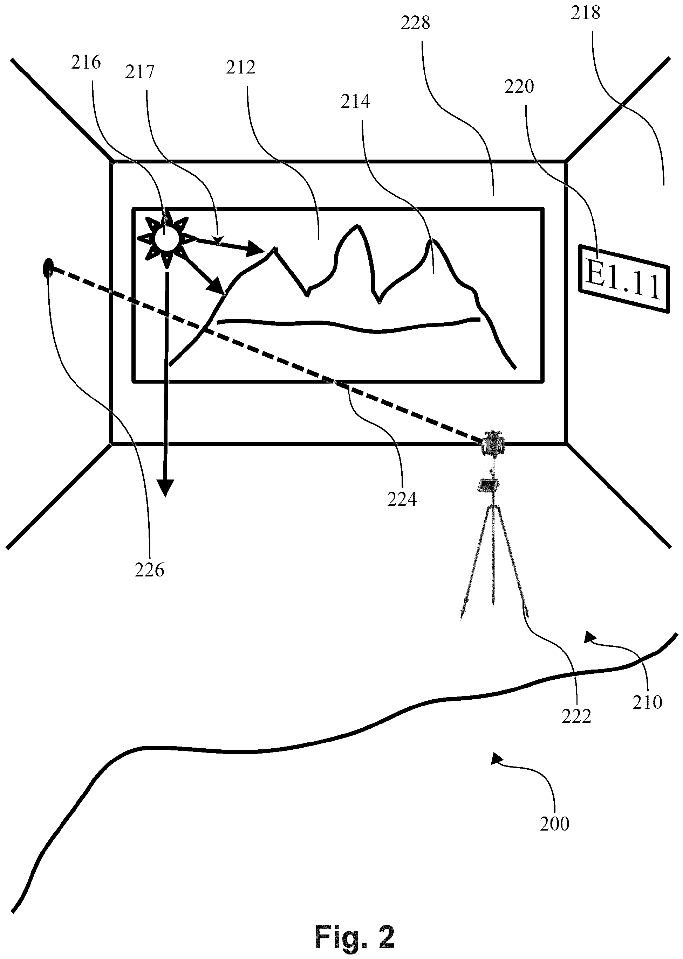

**Fig.** 2 zeigt einen Baustellenteil **210** einer Baustelle **200** aus einer Perspektive des Bauroboter 10 beziehungsweise seines Lokalisierungsgeräts 32 (siehe beide Fig. 1), wenn dieser und damit seine Kamera 24 sich in einem Eingangsbereich des Baustellenteil 210 befinden. Der Baustellenteil 210 entspricht einem Raum eines größeren Gebäudes. Der Baustellenteil 210 weist ein Fenster **212** auf. Beim Blick durch das Fenster 212 ist ein Gebirge **214** erkennbar. Ferner ist die Sonne **216** durch das Fenster 212 zu sehen. Insbesondere scheint Sonnenlicht **217** in den Baustellenteil 210 hinein. Das Sonnenlicht 217 strahlt in der Darstellung gemäß Fig. 2 von links vorne in den Baustellenteil 210 hinein.

Weiter ist an einer Wand **218** eine Identifikationsmarkierung **220** angeordnet. Die Identifikationsmarkierung 220 identifiziert den Baustellenteil 210. In so einem Fall, der beispielsweise einer weit entwickelten Bauphase entsprechen kann, kann das Lokalisierungsgerät 32 zur groben Lokalisierung eine Bildaufnahme der Identifikationsmarkierung 220 mit der Kamera 24 aufnehmen und durch Auswerten der Bildaufnahme den Baustellenteil 210 identifizieren und damit grob lokalisieren. Je nach Qualität der Identifikationsmarkierung, insbesondere je nach Umfang der in der Identifikationsmarkierung 220 hinterlegten Daten, kann dies bereits zur eindeutigen Identifikation des Baustellenteils 210 genügen. Bei einem geringeren Datenumfang kann zumindest beispielsweise eine Stockwerksnummer oder dergleichen identifizierbar sein.

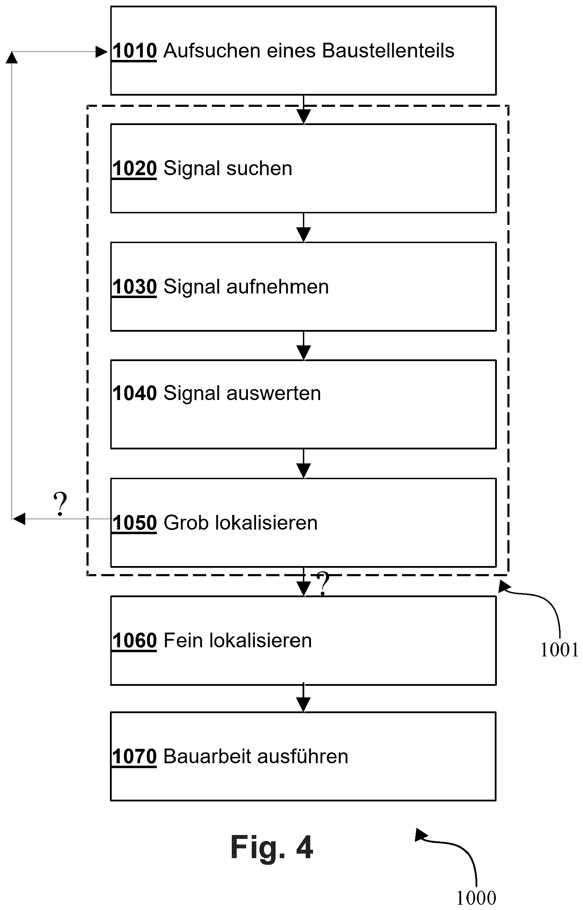

Für ein früheres Stadium des Baufortschritts kann der Bauroboter 10, wie nachfolgend, insbesondere im Zusammenhang mit Fig. 4 näher erläutert, eine Bildaufnahme seiner Sicht durch das Fenster 212 zur Groblokalisierung auswerten.

Im Baustellenteil 210 befindet sich eine Totalstation 222. Die Totalstation 222 peilt mit ihrem Laserstrahl **224** eine Zielposition **226** an. In diesem Ausführungsbeispiel entspricht die Zielposition 226 einer Arbeitsposition, an der eine Bauarbeit, beispielsweise ein Bohren eines Loches, ausgeführt werden soll. Um die Zielposition 226 anpeilen zu können, kann sich die Totalstation 222 selbsttätig kalibrieren. Beispielsweise kann sie dazu eingerichtet sein, die Position und Lage des Fensters 212 relativ zu einer dieses umgebende Wand **228** in Relation zu einem Nullpunkt, beispielsweise einer Ecke des Fensters 212 entsprechend, auszumessen. Dann kann die Totalstationen 222 relativ zu Position und Lage des Fensters 212 die Position der Zielposition 226 bestimmen.

Der Bauroboter 10 kann mit seinem Lokalisierungsgerät 32 bezüglich der zu bestimmenden Zielposition 226, an der nachfolgend Bauarbeiten ausgeführt werden sollen, abgleichen, dass der Baustellenteil 210 tatsächlich dem Baustellenteil entspricht, in dem sich die Zielposition 226 befinden soll, also eine Groblokalisation durchführen. In diesem Ausführungsbeispiel, in dem das Lokalisierungsgerät 32 Teil des Bauroboters 10 ist, kann dies bedeuten, dass der Bauroboter 10 überprüft, dass die vom Laserstrahl 224 anvisierte Position sich im richtigen Raum innerhalb der Baustelle 200 befindet.

In der Situation gemäß Fig. 2 befindet sich die Totalstation 222 bereits im Baustellenteil 210. Denkbar ist auch, dass die Totalstation 222 selbst mobil ist. Beispielsweise kann sie eine Fahrplattform aufweisen. Dann kann der Bauroboter 10 eingerichtet sein, die Totalstation 222 zu veranlassen, sich ihm zu nähern und sich damit in das Baustellenteil 210 zu bewegen.

Somit kann dann die Totalstation 222 die Zielposition 226 innerhalb des Baustellenteils 210 fein lokalisieren.

Anschließend kann der Bauroboter 10 an der nunmehr bestimmten Zielposition 226, für die überprüft ist, dass sich der Bauroboter 10 im richtigen Baustellenteil 210, also im richtigen Raum, befindet, eine gewünschte Bauarbeit, beispielsweise eine Bohrarbeit, ausführen.

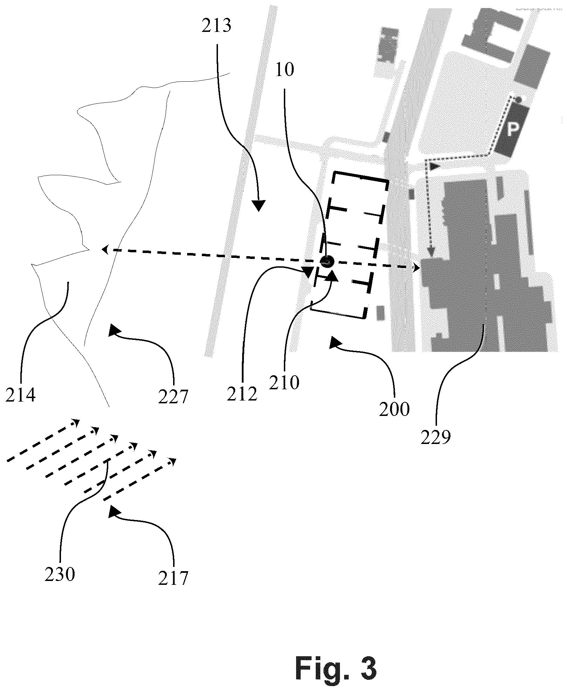

**Fig. 3** zeigt nun die Baustelle 200 mitsamt einer Umgebung und mit dem Baustellenteil 210 in einer schematischen Darstellung von oben.

Die Baustelle 200 weist eine Vielzahl von gleichartigen, allenfalls zueinander symmetrisch ausgebildeten Baustellenteilen in Form von Einzelräumen auf, von denen der Baustellenteil 210 in Fig. 3 markiert ist und indem sich in der in Fig. 3 gezeigten Situationen der Bauroboter 10 befindet.

Angrenzend an das Fenster 212 befindet sich ein Bereich **213** außerhalb der Baustelle 200. Eine Sicht aus dem Fenster 212 erlaubt somit den Empfang natürlicher Signale in Form von Licht beziehungsweise des optischen Bildes des Bereichs 213 mitsamt dem Gebirge 214 usw.

Zusätzlich sind GIS-Daten **227** schematisch abgebildet, die zusätzliche Landschaftsdaten repräsentieren. In den GIS-Daten ist beispielsweise hinterlegt, dass sich westlich der Baustelle 200 das Gebirge 214 befindet und östlich ein Gebäude **229.** Eine Einfallsrichtung **230** des Sonnenlichts 217 ist ebenfalls markiert. Entsprechend der Tageszeit, die im Beispiel gemäß Fig. 3 repräsentiert ist, reicht die Einfallsrichtung 230 ungefähr von Südwest nach Nordost.

Der ebenfalls in Fig. 3 schematisch dargestellte Bauroboter 10 befindet sich an einer westlichen Seite der Baustelle 200. Dies kann der Bauroboter 10, wie sich der Fig. 3 entnehmen lässt, aus der Auswertung der Bildaufnahme, und hier insbesondere aus der Analyse der Einfallsrichtung 230 und der Detektion des Gebirges 214, ermitteln. Die Groblokalisierung kann zusätzlich abgesichert werden, wenn der Bauroboter 10 zusätzlich eine Bildaufnahme auf einer dem Fenster 212 gegenüberliegenden Seite durch ein dem Fenster 212 entsprechendes Fenster eines benachbarten Baustellenteils aufnimmt. In einer solchen Bildaufnahme kann der Bauroboter 10 beispielsweise das Gebäude 229 identifizieren.

Entsprechend der Einfallsrichtung 230 liegt somit das Gebirge 214 linker Hand und das Gebäude 229 rechter Hand des Bauroboters. Zudem kann zur Groblokalisierung herangezogen werden, dass sich der Bauroboter 10 an der Wand 210 beziehungsweise in der Nähe des Fensters 212 und somit beispielsweise außerhalb eines Zentrums der Baustelle 200 befindet.

**Fig.** 4 stellt in Form eines Flussdiagramms ein Verfahren **1000 zur** Ausführung einer Bauarbeit auf einer Baustelle an einer Zielposition einschließlich einem Verfahren **1001** zur Lokalisierung einer Zielposition auf einer Baustelle, das einen Teil der Phasen des Verfahrens 1000 umfasst, dar.

Die Verfahren 1000, 1001 werden im Folgenden unter Bezugnahme auf die vorangehend eingeführten Bezugszeichen näher erläutert.

Zunächst sucht der Bauroboter 10 in einer Phase **1010** ein Baustellenteil auf, von dem zu vermuten ist, dass sich auf diesem Baustellenteil eine zu bestimmende Zielposition 226 tatsächlich befindet. Beispielsweise sucht der Bauroboter 10 das Baustellenteil 210 auf. Es gilt jedoch im Rahmen des Verfahrens 1001, diese implizite Vermutung zu verifizieren.

Dazu sucht der Bauroboter 10 in einer Phase **1020** ein Signal, das zur Groblokalisierung verwendbar sein kann. In Bezug auf die vorangehenden Erläuterungen in Verbindung mit Fig. 2 und Fig. 3 identifiziert der Bauroboter 10 beispielsweise eine Durchgangsöffnung, durch die hindurch eine frei Sicht nach außen besteht. Insbesondere identifiziert er zunächst das Fenster 212 mit Hilfe seiner Kamera 24. Als Signal in diesem Ausführungsbeispiel kann er beispielsweise das durch das Fenster in den Baustellenteil 210 fallendes Licht, in diesem Fall ein natürliches Signal, vorsehen. In Varianten des Verfahrens sucht der Bauroboter 10 noch weitere Signale z. B., wie in Fig. 3 dargestellt, aus anderen Richtungen.

Sodann nimmt der Bauroboter 10 in einer nachfolgenden Phase **1030** das Signal auf, anhand dessen die Groblokalisierung erfolgen soll. Insbesondere nimmt der Bauroboter 10 Licht in Form von Bildaufnahmen der Sicht durch das Fenster 212 auf. Denkbar ist, weitere Signale beziehungsweise Bildaufnahmen, beispielsweise aus den anderen Richtungen, aufzunehmen. Insbesondere kann er eine zweite Bildaufnahme in Richtung des Gebäudes 229 erstellen.

Anschließend wertet der Bauroboter 10 in einer Phase **1040** das aufgenommene Signal, hier also das Licht beziehungsweise die Bildaufnahmen, aus. In diesem Fall identifiziert er das Gebirge 214 und ermittelt die Einfallsrichtung 230 des Sonnenlichts 217. In der zweiten Bildaufnahme identifiziert er das Gebäude 229.

Die beiden Elemente des die Baustelle 200 umgebenden Bereichs 213 ordnet er den GIS-Daten 227 zu, um daraus zunächst die relativen Lagen des Gebirges 214 sowie des Gebäudes 229 relativ zur Baustelle 200 abzuleiten.

In einer nachfolgenden Phase **1050** kann der Bauroboter 10 anhand der ermittelten Daten sich grob lokalisieren. Insbesondere kann er verifizieren, dass er sich im richtigen Baustellenteil 210 befindet, also in dem Baustellenteil, indem sich die Zielposition 226 befinden soll.

Im Falle, dass er sich in einem falschen Baustellenteil befinden sollte, ist denkbar, dass entweder ein Warnsignal ausgegeben werden und / oder dass der Bauroboter 10 sich zu dem richtigen oder zumindest zu einem anderen Baustellenteil bewegt. Die für die Bewegung geeignete Richtung kann der Bauroboter 10 bei Varianten des Verfahrens 1000 gestützt auf die aus den beiden Bildaufnahmen in Verbindung mit den GIS-Daten gewonnenen Daten auswählen. In diesem Fall kann das Verfahren 1000 mit der Phase 1010 fortgesetzt werden.

Das Verfahren 1001 umfasst bei der hier dargestellten Variante die Phasen 1020 bis 1050.

Die Phasen 1020 bis 1050 können insbesondere durch das in den Bauroboter 10 integrierte Lokalisierungsgerät 32 ausgeführt werden. Es ist jedoch in einer Verfahrensvariante zu den Verfahren 1000, 1001 denkbar, dass das Lokalisierungsgerät 32 ein eigenständiges Gerät, beispielsweise in Form eines Smartphones oder Tabletcomputers, darstellt und somit das Verfahren 1001 eigenständig durchführt.

In einer nächsten Phase **1060** lokalisiert der Bauroboter 10 die Zielposition 226 fein, sobald er sich im richtigen Baustellenteil 210 befindet. Dies kann beispielsweise mit Hilfe der Totalstation 222 erfolgen. Dazu kann beispielsweise der Bauroboter 10 und / oder das Lokalisierungsgerät 32 die Totalstation 222, sofern sie sich noch nicht in dem richtigen Baustellenteil 210 befindet, in diesen verlagern oder in diesem positionieren. Alternativ kann dies auch manuell erfolgen. Mit Hilfe der Totalstation 222 kann dann die Zielposition 226 durch Anpeilen mit dem Laserstrahl 224 unter Bezugnahme auf ein oder mehrere Eichpositionen, die vorab relativ zu einem Planungs-Koordinatensystem, in dem die Zielposition 226 definiert ist, eingemessen sein können, ermittelt werden. Die Zielposition 226 kann durch die Totalstation 222 mit Hilfe ihres Laserstrahls 224 markiert werden.

Der Bauroboter 10 kann dann an der durch den Laserstrahl 224 markierten, grob und fein lokalisierten Zielposition 226 eine gewünschte Bauarbeit in einer Phase **1070** ausführen. Gegebenenfalls kann er dazu von dem Werkzeugwechsler 34 ein geeignetes Werkzeug oder eine geeignete Werkzeugmaschine auswählen und mit dieser die Bauarbeit ausführen. Beispielsweise kann er im Falle einer Bohrarbeit an der Zielposition 226 ein Bohrloch bohren.

Denkbar ist auch, dass die Ausführung der Bauarbeit protokolliert wird und die entsprechenden Protokolldaten beispielsweise auf ein entferntes Rechnungssystem übertragen werden.

### Bezugszeichenliste

- 10: Bauroboter
- 12: mobile Plattform
- 14: Gehäuse
- 16: Steuerraum
- 17: Hubvorrichtung
- 18: Roboterarm
- 19: Arm
- 20: Endeffektor
- 21: Wechselschnittstelle
- 22: Werkzeugmaschine
- 24: Kamera
- 26: Reinigungsvorrichtung
- 27: Steuerung
- 28: Speichereinheit
- 29: Prozessor
- 30: Computerprogrammprodukt
- 32: Lokalisierungsgerät
- 34: Werkzeugwechsler
- 200: Baustelle
- 210: Baustellenteil
- 212: Fenster
- 213: Bereich
- 214: Gebirge
- 216: Sonne
- 217: Sonnenlicht
- 218: Wand
- 220: Identifikationsmarkierung
- 222: Totalstation
- 224: Laserstrahl
- 226: Zielposition
- 227: GIS-Daten
- 228: Wand
- 229: Gebäude
- 230: Einfallsrichtung
- 1000: Verfahren
- 1001: Verfahren
- 1010: Phase
- 1020: Phase
- 1030: Phase
- 1040: Phase
- 1050: Phase
- 1060: Phase
- 1070: Phase

## Patentansprüche

1. **Verfahren (1001)** zur Lokalisierung einer Zielposition (226), insbesondere einer Arbeitsposition, einer Position eines Bauroboters (10) oder einer Position eines tragbaren Gerätes, auf einer Baustelle (200), beispielsweise einer Hochbau-Baustelle (200) oder einer Tiefbau-Baustelle (200), durch ein Lokalisierungsgerät (32), wobei das Lokalisierungsgerät (32) die Zielposition (226) grob lokalisiert, das heißt ein Baustellenteil (210) der Baustelle (200) bestimmt, in der sich die Zielposition (226) befindet.

2. Verfahren nach dem vorhergehenden Patentanspruch, **dadurch gekennzeichnet, dass** das Lokalisierungsgerät (32) eine das Baustellenteil (210) identifizierende Identifikationsmarkierung (220) auswertet, insbesondere liest.

3. Verfahren nach einem der vorhergehenden Patentansprüche, **dadurch gekennzeichnet, dass** das Lokalisierungsgerät (32) zur groben Lokalisierung wenigstens ein von außerhalb des Baustellenteils (210), insbesondere von außerhalb der Baustelle (200) stammendes Signal auswertet.

4. Verfahren nach einem der vorhergehenden Patentansprüche, **dadurch gekennzeichnet, dass** das Lokalisierungsgerät (32) zur groben Lokalisierung wenigstens ein natürliches Signal auswertet.

5. Verfahren nach einem der vorhergehenden Patentansprüche, **dadurch gekennzeichnet, dass** das natürliche Signal auf dem Erdmagnetfeld beruht.

6. Verfahren nach einem der vorhergehenden Patentansprüche, **dadurch gekennzeichnet, dass** das natürliche Signal auf einem Luftdruck beruht.

7. Verfahren nach einem der vorhergehenden Patentansprüche, **dadurch gekennzeichnet, dass** das natürliche Signal auf Licht, insbesondere aus dem Weltraum stammendes Licht wie beispielsweise Sonnenlicht (217), Mondlicht und / oder sonstigem Sternenlicht, beruht.

8. Verfahren nach einem der vorhergehenden Patentansprüche, **dadurch gekennzeichnet, dass** das Signal auf einer Einfallsrichtung (230) des Lichts beruht.

9. Verfahren nach einem der vorhergehenden Patentansprüche, **dadurch gekennzeichnet, dass** das Lokalisierungsgerät (32) zur Groblokalisierung GIS-Daten (227) verwendet.

10. **Verfahren (1000) zur Ausführung einer Bauarbeit** auf einer Baustelle (200) an einer Zielposition (226), beispielsweise eine Hochbau-Baustelle (200) oder eine Tiefbau-Baustelle (200), durch einen Bauroboter (10),
wobei ein Lokalisierungsgerät (32) die Zielposition (226) unter Verwendung des Verfahrens (1001) nach einem der vorhergehenden Patentansprüche grob lokalisiert, also ein Baustellenteil (210) der Baustelle (200) bestimmt, in dem sich die Zielposition (226) befindet,
wobei Koordinaten der Zielposition (226) relativ zum Baustellenteil (210) oder zur Baustelle (200) bestimmt werden, und
wobei der Bauroboter (10) die Bauarbeit an der Zielposition (226) ausführt.

11. Verfahren (1000) nach dem vorhergehenden Patentanspruch, wobei der Bauroboter (10) aus einer Datenbank wenigstens eine auszuführende Bauarbeit auswählt.

12. Verfahren (1000) nach einem der beiden vorhergehenden Patentansprüche, **dadurch gekennzeichnet, dass** der Bauroboter (10) die auszuführende Bauarbeit anhand des durch die Groblokalisierung ermittelten Baustellenteils (210) auswählt.

13. **Lokalisierungsgerät (32)** zur Lokalisierung einer Zielposition (226), das eingerichtet ist, das Verfahren (1000) nach einem der Ansprüche 1 bis 9 auszuführen.

14. **Computerprogrammprodukt (30),** das eingerichtet ist, bei Ausführung auf dem Lokalisierungsgerät (32) nach dem vorhergehenden Anspruch das Verfahren (1000) nach einem der Ansprüche 1 bis 9 auszuführen.

15. **Bauroboter (10)** zur Ausführung einer Bauarbeit auf einer Baustelle (200) an einer Zielposition (226), umfassend eine mobile Plattform (12), einen Roboterarm (18) mit einem Endeffektor (20) sowie einem Lokalisierungsgerät (32) nach Anspruch 13.
